# EUROPÄISCHE PATENTANMELDUNG

(11) **EP 0 698 545 A1**
(43) Veröffentlichungstag der Anmeldung: **28.02.1996**
(21) Anmeldenummer: 94114624.3
(22) Anmeldetag: 16.09.1994
(51) Int. Cl.: B62D 33/04, B60P 7/135

(54) **Doppelstockwagen**

(30) Priorität: 18.08.1994 DE 9413332 U
(71) Anmelder: ACKERMANN-FRUEHAUF GmbH, D-50170 Kerpen-Sindorf (DE)
(72) Erfinder: Franz, Carl, D-42111 Wuppertal (DE)
(74) Vertreter: Alber, Norbert

(57) **Zusammenfassung**

Die Erfindung betrifft einen LKW-Aufbau mit Doppelstockfunktion, der trotz stirnseitigem Rolltor vor allem am rolltorseitigen Ende eine ausreichende Steifigkeit gegen die vor allem durch die Ladung aufgebrachten Querkräfte aufweist. Dabei wird das rechteckige Querschnittsprofil des Aufbaus (1) durch wenigstens eine, diagonal verlaufende, zugfeste Strebe (10) versteift, die schräg ansteigend - mehr oder weniger flach - angeordnet und leicht aus der Verstrebungslage entfernbar ist, wobei die Strebe (10) und der rahmenfeste Befestigungspunkt (8) möglichst nahe am rolltorseitigen Ende des Aufbaus (1) angeordnet sind.

## Beschreibung

Bei LKW-Aufbauten sind als stirnseitige Verschlußmechanismen u.a. Türen, insbesondere zweiflügelige Türen, einerseits sowie Segmenttore oder Rolltore, die nach oben öffnen, andererseits bekannt.

Während zweiflügelige Türen durch sich über die ganze Höhe erstreckende Verriegelungsstangen fest mit dem heckseitigen Aufbauende verspannt werden, und diesem dadurch zusätzliche Stabilität geben, ist dies bei Rolltoren oder anderen Sektionaltoren nicht möglich.

Die z. B. aufgrund von Wankbewegungen des Fahrzeugaufbaus durch die Ladung auf den Aufbau einwirkenden Querkräfte können daher leichter zu einer Torsion und damit Beschädigung des Aufbaus vor allem im hinteren Bereich führen.

Diese Problematik taucht verstärkt dann auf, wenn der Aufbau als sogenannter Doppelstockaufbau konzipiert ist, also auf halber Höhe des Aufbaus eine zweite, zusätzliche Ladeebene angeordnet werden kann.

Dies wird erreicht durch waagerecht, quer verlaufende Ladebalken oder Ladeböden, welche mit ihren stirnseitigen Enden in senkrecht in den Innenflächen der Seiten des Aufbaus befestigten Schienen höhenverstellbar geführt werden.

Wird kein zusätzlicher Ladeboden benötigt, befinden sich diese Ladebalken in ihrer Ruheposition unterhalb des Daches des Aufbaus. Wird eine zweite Ladeebene gewünscht, werden diese Ladebalken entlang der Schienen z. B. auf halbe Höhe des Aufbaus herabgeschoben und dort verriegelt und es wird auf dieser zusätzlichen Ladeebene Fracht abgelegt. Dabei können einzelne der Ladebalken auch nicht mit Ladung belegt sein, sondern vor oder hinter der Ladung als Ladungssicherung in Fahrzeuglängsrichtung dienen.

Ist die Doppelstockfunktion aktiviert, so wirken die durch die Ladung bedingten Querkräfte selbst ohne Berührung zwischen Ladung und Seitenwand des Aufbaus immer in der Höhe des Zwischenbodens auf die Seitenwand des Aufbaus ein, was zu sehr starken Torsion führt, die zu dem nicht versteiften, durch ein Rolltor verschlossenen, in der Regel hinteren Ende des Aufbaus immer stärker werden.

Es ist daher die Aufgabe gemäß der Erfindung, einen LKW-Aufbau mit Doppelstockfunktion zu schaffen, der trotz stirnseitigem Rolltor vor allem am rolltorseitigen Ende eine ausreichende Steifigkeit gegen die vor allem durch die Ladung aufgebrachten Querkräfte aufweist.

Diese Aufgabe wird durch die kennzeichnenden Merkmale des Anspruchs 1 gelöst.

Vorteilhafte Ausführungsformen ergeben sich aus den Unteransprüchen.

Ziel ist es, das rechteckige Querschnittsprofil des Aufbaus durch wenigstens eine, diagonal verlaufende, Strebe zu versteifen. Eine derartige Strebe, vor allem im Bereich des rolltorseitigen Endes muß selbstverständlich für den Be- und Entladevorgang leicht entfernbar sein.

Eine derartige Strebe kann zwischen einem rahmenfesten Punkt, vorzugsweise am oder im Boden des Aufbaus einerseits und - direkt oder indirekt - der Seitenwand des Aufbaus, vorzugsweise in Höhe des Angriffspunktes der Querkräfte, also im Befestigungspunkt des Ladebalkens andererseits, angreifen.

Handelt es sich dabei um ausschließlich zugfeste Streben, also Seile etc., so müssen beide Seitenwände mit jeweils einer Strebe gegenüber rahmenfesten Punkten verspannt werden. Im Zuge einer Optimierung des Kraftflusses sind die Streben selbstverständlich so wenig geneigt wie möglich anzuordnen.

An Stelle einer Befestigung der Streben direkt an den Fahrzeugwänden ist es günstiger, die bereits vorhandene formschlüssige Verbindung zwischen den stirnseitigen Enden der Ladebalken und den Seitenwänden über die dort vorhandenen vertikalen Profilschienen auszunutzen, und die Streben oder Strebe nicht direkt mit der Seitenwand, sondern mit dem Ladebalken zu verbinden.

Dadurch müssen in den Seitenwänden keine zusätzlichen, gegen Ausreißen gesicherten, stabilen Befestigungspunkte mehr geschaffen werden.

Bei Verwendung einer sowohl zugfesten als auch druckfesten Strebe, etwa eines Stahlrohres, kann eine solche Rohrstrebe schwenkbar an einem Ladebalken befestigt werden. Wenn keine Verstrebung nötig ist, etwa weil sich mangels zweiter Ladeebene die Ladebalken in der Ruheposition unter der Decke des Aufbaus befinden, ist die Rohrstrebe in eine Ruhelage parallel zum Ladebalken verschwenkt und dort arretiert.

Befindet sich der Ladebalken, vorzugsweise der dem Rolltor nächstliegende Ladebalken, in der Funktion als zweite Ladeebene in halber Aufbauhöhe, kann die Rohrstrebe nach unten verschwenkt werden, um mit ihrem freien Ende an einem rahmenfesten Befestigungspunkt des Bodens des Aufbaus fest verbunden zu werden.

Um eine möglichst geringe Neigung der Strebe in der Verstrebungsposition zu erreichen, sollten sich der Schwenkpunkt am Ladebalken einerseits und der Befestigungspunkt am Boden andererseits in Querrichtung des Fahrzeuges möglichst weit auseinander befinden.

Weiterhin sind derartige Ladebalken zur Ermöglichung eines Längenausgleiches, der vor allem beim Höhenverstellen der Ladebalken aus Handhabungsgründen notwendig ist, mit einem Längenausgleich dergestalt ausgestattet, daß die Ladebalken aus ineinander verschiebbaren Teilen, dem Basisteil und dem Teleskopteil bestehen.

Will man beim Verstreben mit nur einer einzigen, zug- und druckfesten, Rohrstrebe auskommen, so muß diese Längenveränderbarkeit außer Funktion gesetzt werden, da sonst nur eine der Seitenwände durch die zug- und druckfeste Strebe versteift werden würde.

Zu diesem Zweck kann die Schwenkachse der Rohrstrebe am Ladebalken sich auf der vom Überlappungsbereich zwischen Basisteil und Teleskopteil des Ladebalkens abgewandten Ende befinden, und die Rohrstrebe am freien Ende mittels eines handbetätigten Riegelbolzens am Ladebalken in der Ruhestellung befestigt werden.

Nach dem Lösen des Riegelbolzens, um die Rohrstrebe in die Verstrebungsposition zu verschwenken, wird mit dem gleichen Riegelbolzen aufgrund jetzt tieferen Eindringens in den Ladebalken eine Verriegelung zwischen Basisteil und Teleskopteil erreicht.

Eine andere Möglichkeit besteht darin, die Schwenkachse der Rohrstrebe gegenüber dem Ladebalken direkt im Überlappungsbereich zwischen dessen Basisteil und Teleskopteil anzuordnen und so auszugestalten, daß in der Ruhestellung der Rohrstrebe, also parallel zum Ladebalken, durch die Schwenkachse keine Verriegelung zwischen Basisteil und Teleskopteil gegeben ist, diese jedoch bewirkt wird, sobald die Rohrstrebe in die Verstrebungslage verschwenkt wird.

Ebenso ist es möglich, die Schwenkachse der Strebe gegenüber dem Ladebalken zwar nicht im Überlappungsbereich zwischen dessen Basisteil und Teleskopteil anzuordnen, jedoch von der Schwenkachse zum Überlappungsbereich die Schwenkbewegung der Strebe über eine Hebelmechanik zu übertragen, und dadurch automatisch durch das Verschwenken der Strebe von der Ruhelage in die Verstrebungslage eine Verriegelung zwischen Basisteil und Teleskopteil des Ladebalkens zu bewirken.

Im übrigen ist es auch notwendig, dafür zu sorgen, daß die Enden der Ladebalken nicht wie in der üblichen Doppelstockausbildung nur gegen ein Verschieben nach unten automatisch einrasten, dagegen jederzeit ohne aktive Entriegelung nach oben geschoben werden können. Denn dadurch würde bei Druckbelastung auf die in Verstrebungslage befindliche Strebe das entsprechende Ende des Ladebalkens hochgefahren werden.

Dies wird vermieden, indem durch einen zusätzlichen, längs des Ladebalkens federbelastet aus dessen Stirnseite oder daneben vorstehenden Ende der Ladebalken auch gegen ein Hochschieben durch automatisches Verrasten gesichert ist. Nur durch aktive Entriegelung des federbelasteten Bolzens ist ein Hochschieben des Ladebalkens möglich.

Weiterhin kann die Verstrebung bei Benutzung der zweiten Ladeebene zwangsgesteuert herbeigeführt werden, indem am rahmenfesten Befestigungspunkt ein mechanisch, hydraulisch, pneumatisch oder elektrisch wirkender Sensor angeordnet ist, der eine wichtige Funktion des LKW außer Funktion setzt. Beispielsweise kann diese Vorrichtung in einem federbelasteten Funktionsteil bestehen, welches durch die Kraft der Feder quer in den Schließweg des Rolltores oder dessen Verriegelungseinrichtung gebracht wird, so daß eine vollständiges Verschließen des Rolltores nicht möglich ist. Erst bei Verrastung der Strebe am Befestigungspunkt wird durch eine Funktionsfläche der Strebe dieses Funktionsteil entgegen der Kraft der Feder aus der blockierenden Stellung herausbewegt.

Eine andere Möäglichkeit besteht darin, über einen derartigen Sensor z. B. bei fehlender Verstrebung die Feststellbremse des LKW in die gebremste Lage zu bringen.

Da eine Verstrebung jedoch nur bei Benutzung der zweiten Ladungsebene notwendig ist, kann ferner eine Überlagerung dieser Blockierungsvorrichtung durch einen Aktivator vorgesehen werden.

Zu diesem Zweck können beispielsweise Sensoren in der Nähe der Decke des Aufbaus in den Seitenwänden vorhanden sein, die dann betätigt werden, wenn sich die Ladebalken in der hochgeschobenen Ruheposition unter der Decke befinden, wodurch dann die Vorrichtungen für die Blockierfunktion im Befestigungspunkt außer Funktion gesetzt werden.

Eine Ausführungsform gemäß der Erfindung ist nachfolgend anhand der Figuren beispielhaft näher beschrieben. Es zeigen
- Fig. 1:: eine heckseitige Ansicht eines geöffneten Rolltores,
- Fig. 2:: eine heckseitige Ansicht mit der Strebe 10 in Ruheposition,
- Fig. 3:: eine Ansicht ähnlich Fig. 2 mit der Strebe in Verstrebungslage und
- Figur 4:: eine perspektivische Darstellung eines Aufbau-Hecks.

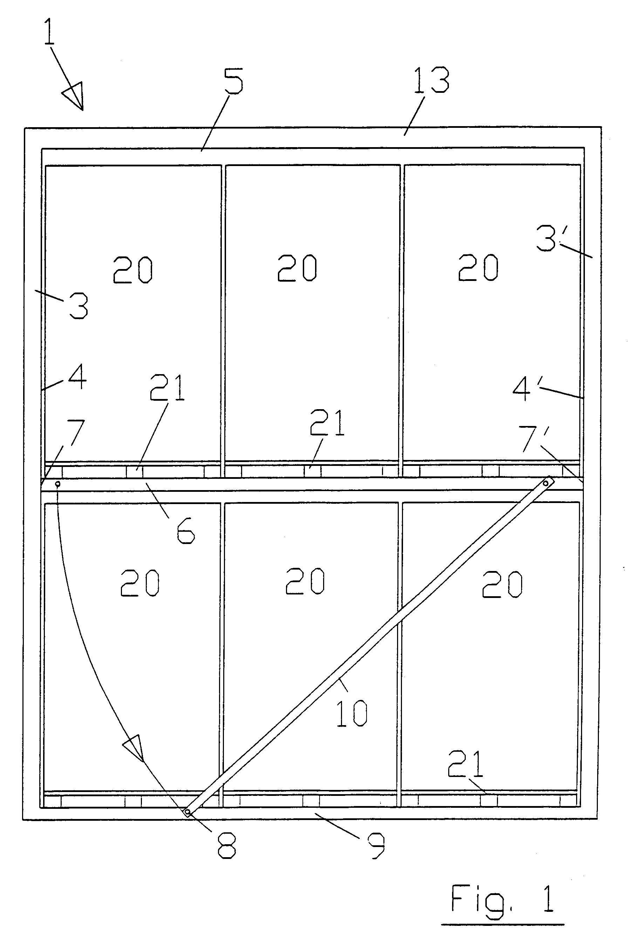

Fig. 1 zeigt das Heck eines mit zusätzlichem Ladeboden ausgestatteten und beladenen LKW-Aufbaus, der mit Hilfe der Zug-Druck-Strebe 10 gegen Querkräfte verstrebt ist.

Dabei ist der Ladebalken 6 aus seiner Ausgangsposition unter der Decke 13 des Aufbaus 1 nach unten verschoben, wobei der Ladebalken 6 mit seinen Enden 7, 7' entlang von in den Seiten 3, 3' eingelassenen, vertikalen Befestigungsschiene 4, 4' verschoben und in der Position für den Zwischenboden fixiert wird. Dadurch können sowohl auf dem Boden 9 als auch auf den als Zwischenboden dienenden Ladebalken 6 Paletten 21 mit Ladung 20 abgestellt werden.

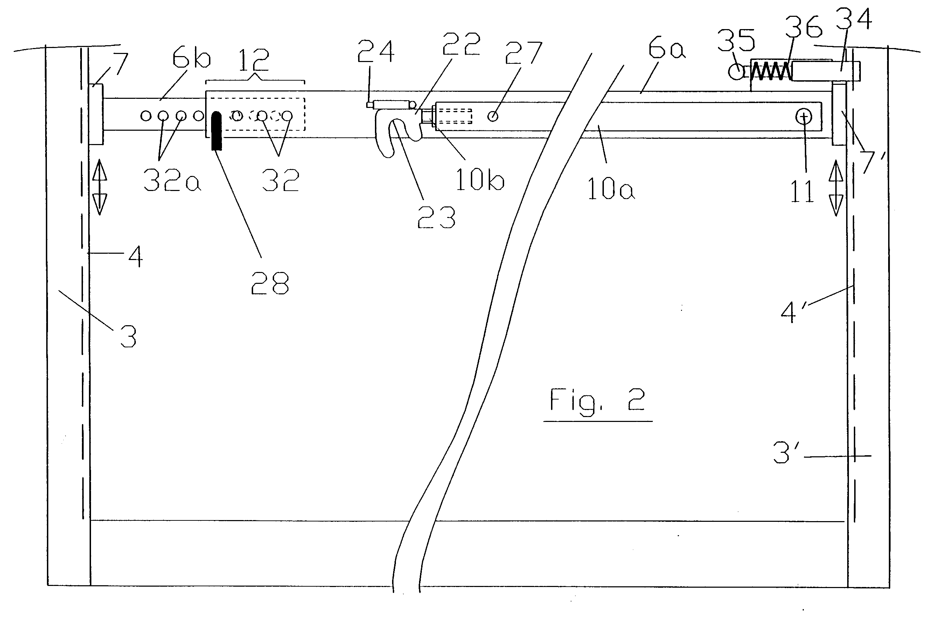

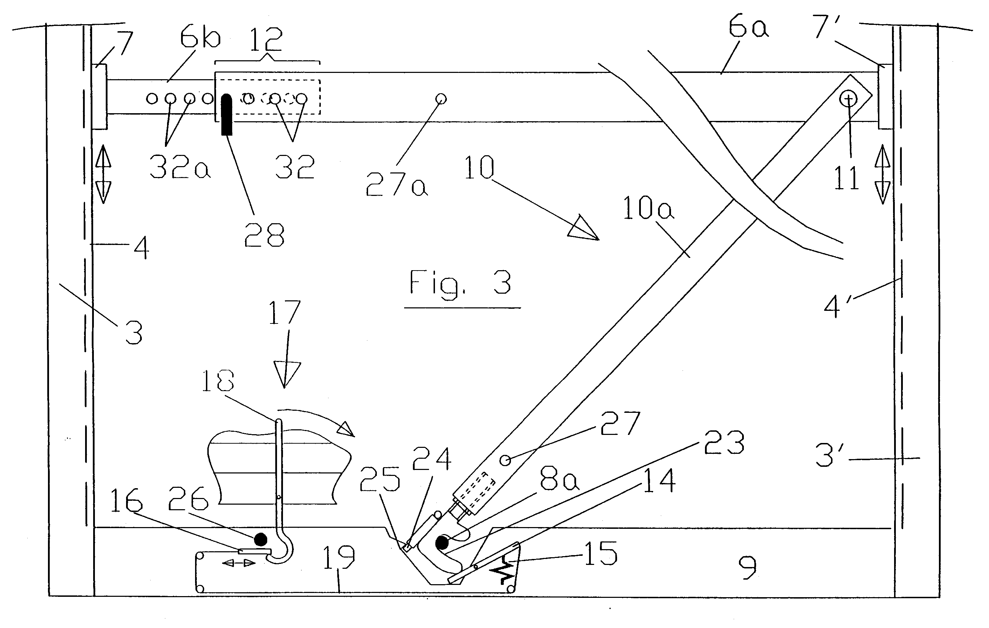

Die durch die auf dem Ladebalken 6 abgestellte Ladung 20 auf den Aufbau bei Kurvenfahrt etc. einwirkenden Querkräfte werden durch Verstrebung mit Hilfe der Strebe 10 zwischen einem Befestigungspunkt 8 im Boden 9 und einem randseitigen Bereich des Balkens 6 aufgenommen. Zu diesem Zweck kann die Strebe 10, die um eine Schwenkachse 11 am hintersten Ladebalken 6 befestigt ist, von einer Ruheposition parallel zum Ladebalken 6 in eine Verstrebungslage, wie in Fig. 1 dargestellt, verschwenkt werden, wobei der Kopf 22 am freien Ende der Strebe 10 fest mit dem Boden 9 in einem Befestigungspunkt 8, vorzugsweise einem rahmenfesten Bolzen 8a, verrastet, wie im einzelnen in den Fig. 2 und 3 dargestellt.

In der in Fig. 2 dargestellten Position befindet sich die Strebe 10 noch in der Ruhelage, parallel seitlich an dem Ladebalken 6. In dieser Stellung ist die Strebe 10 fixiert, indem ein Justierstift 28 durch eine Justierbohrung 27 bzw. 27a der Strebe 10 bzw. des Ladebalkens 6 hindurchgesteckt ist. Als Schwenkachse 11 dient ein Schwenkbolzen am rechten Rand des Ladebalkens 6 und damit dessen Basisteils 6a. Aus dem linken Ende des Basisteiles 6a ist ein Teleskopteil 6b herausziehbar, um die Länge des Ladebalkens 6 verändern zu können.

Dies ist notwendig, um bei einem ungleichmäßigen Hochschieben des Ladebalkens kein unlösbares Verklemmen von dessen Enden 7, 7' in den Seiten 3, 3' geführten Befestigungsschienen 4, 4' zu bewirken.

Zusätzlich ist am - wenigstens an dem der Schwenkachse 11 für den Ladebalken 10 benachbarten - stirnseitigen Ende 7' des Ladebalkens 6 eine Verriegelung notwendig. Denn bei normaler Doppelstock-Ausführung eines Aufbaus rastet das entsprechende Ende 7, 7' des Ladebalkens 6 in der jeweiligen Befestigungsschiene 4, 4' automatisch ein, ist dadurch jedoch nur gegen das Absenken automatisch gesichert, während ein Hochschieben des Ladebalkens ohne aktive Entriegelungsmaßnahmen jederzeit möglich ist. Bei der erfindungsgemäßen Ausführung würde dies jedoch eine Druckbelastung der Strebe 10 verhindern, und statt dessen würde das entsprechende Ende 7' des Ladebalkens 6 sich hochbewegen.

Dies wird verhindert, indem - in Figur 2 oberhalb des Ladebalkens 6 dargestellt, in der Praxis jedoch auch häufig seitlich auf der vom Betrachter abgewandten Rückseite der Strebe 10 angeordnet - beim Sicherungsbolzen 34 parallel zum Ladebalken 6 durch eine Feder 36 belastet in die Führungsschiene 4 hinein vorsteht, und dort in eine entsprechende Bohrung einrastet. Das Ende 7' des Ladebalkens 6 kann dabei sowohl nach oben als auch nach unten nur nach aktiver Entriegelung des Sicherungsbolzens 34 bewegt werden, wozu der Sicherungsbolzen 34 mit Hilfe des am rückseitigen Ende angeordneten Handgriffes 35 gegen die Kraft der Feder 36 aus der Schiene 4' zurückgezogen werden muß.

Bei der in Figur 3 dargestellten, in die Verstrebungslage nach unten verschwenkten Schräglage der Strebe 10 ist der Kopf 22 der Strebe 10 am Befestigungspunkt 8 festgelegt, indem der am Befestigungspunkt 8 vorhandene Bolzen 8a, der fest mit dem Boden 9, insbesondere dem Unterteil des Heckportales des Aufbaus 1 verbunden ist, dabei in einer nach unten weisenden Einbuchtung 23 des Kopfes 22 der Strebe 10 anliegt, und auch gegenüber den Flanken dieser Einbuchtung 23, also in Längsrichtung der Strebe 10, nur geringfügiges Spiel besitzt. In dieser Stellung wird der Kopf 22 fixiert, indem der auf der Oberseite des Kopfes 22 angeordnete, in einer Hülse der Strebe 10 zurückziehbare Sicherungsstift 24 mittels Federkraft in eine entsprechende Ausnehmung 25 des Bodens 9 verrastet ist.

Dadurch ist bereits eine Verstrebung vom Befestigungspunkt 8 gegenüber der in Figur 3 rechten Seite 3' gegeben. Um gleichzeitig eine Verstrebung auch der linken Seite 3' zu gewährleisten, muß die Längenveränderbarkeit des Ladebalkens 6 durch relative Bewegung von Basisteil 6a und Teleskopteil 6b zueinander blockiert werden. Dies geschieht dadurch, daß der beim Herabschwenken in die Verstrebungslage herauszuziehende Justierstift 28 nicht in die Justierbohrung 27a des Balkendecks zurückgesteckt wird, sondern in eine der Blockierbohrungen 32, die in Längsrichtung des Ladebalkens 6 im Überlappungsbereich 12 zwischen den beiden Teilen des Ladebalkens angeordnet sind. Eine ähnliche Reihe von Blockierungsbohrungen 32a befindet sich im überlappenden Bereich des Teleskopteiles 6b, jedoch mit gegenüber den Blockierbohrungen 32 unterschiedlichem Abstand, so daß nur eine der Bohrungen 32/32a miteinander fluchten. In diese als fluchtend zu erkennende Bohrungen wird der Justierstift 28 eingesteckt und durch übliche Mittel gesichert, wodurch die Längenveränderbarkeit des Ladebalkens 6 blockiert ist.

In der unteren Hälfte der Fig. 3 ist weiterhin die Möglichkeit dargestellt, wie das Verbringen der Strebe 10 in die Verstrebungslage vor dem Schließen des Rolltores und damit dem Bewegen des LKW erzwungen werden kann:
Die in der linken Hälfte von Figur 3 dargestellte Verriegelungseinheit 17 zeigt den - in der Realität in der Mitte des Rolltores befindlichen - Verriegelungshebel 18 mit seinem hakenförmigen Ende, welches nach dem Verschwenken des Verriegelungshebels - der im unteren Bereich am Rolltor 2 befestigt ist - den Torbolzen 26, der wiederum fest im Boden 9 verankert ist, hintergreift, wodurch ein Hochziehen und Öffnen des Rolltores 2 verhindert wird.

Dieses Verriegeln durch Verschwenken des Verriegelungshebels 18 wird verhindert, indem sich ein Sperrstift 16 im Schwenkweg des hakenförmigen Endes des Verriegelungshebels 18 federbelastet befindet. Dieser quer in den Schwenkweg gerichtete Sperrstift 16 befindet sich entgegen der Kraft der ihn vorwärts drückenden Feder nur dann in einer zurückgezogenen, die Betätigung des Verriegelungshebels 18 nicht behindernden, Position, wenn der Sperrstift 16 mit Hilfe eines Bowdenzuges 19 zurückgezogen ist. Der Bowdenzug 19 ist mit seinem anderen Ende an einem Hebel 14 befestigt, und betätigt den Sperrstift 16 gegen die Kraft der Feder nur dann, wenn der Hebel 14 an seinem vom Bowdenzug 19 abgewandten Ende herabgedrückt wird, was durch den Kopf 22 der Sperrstange geschieht, wenn sich diese in der Verstrebungslage eingerastet befindet.

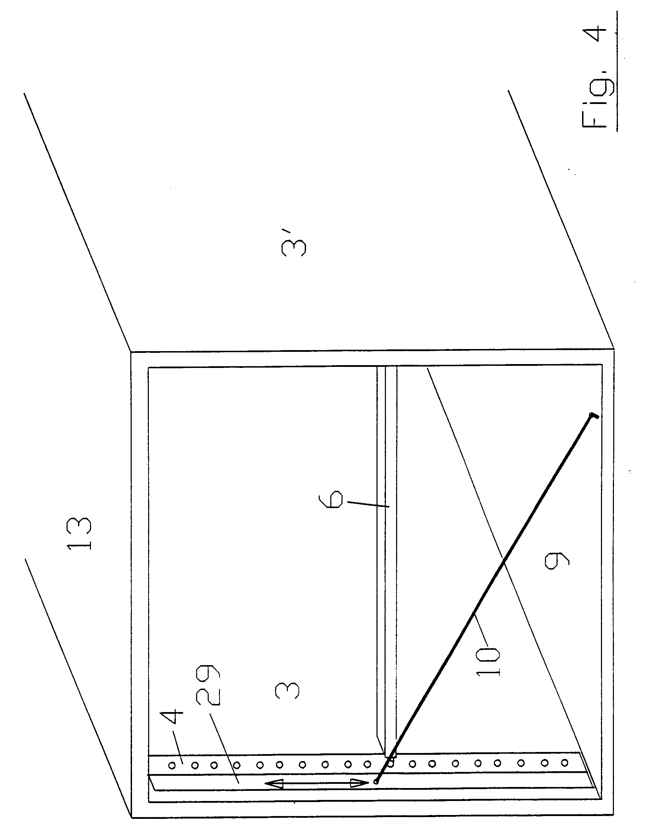

Demgegenüber zeigt Fig. 4 eine Lösung, bei der die Strebe 10 nicht am Ladebalken 6 befestigt ist, sondern in der Nähe des Heckportales des Aufbaus 1 mit dem einen Ende entlang einer senkrecht auf der Innenfläche der Seitenwand 3 geführten Seitenschiene 29 verschiebbar geführt ist.

Das andere Ende der Strebe 10 kann in der gewünschten verstrebenden Schräglage der Strebe 10 in einem rahmenfesten Befestigungspunkt 8 im Boden des Aufbaus 1 befestigt werden.

Die Strebe 10 kann dadurch von einer schräg durch den Querschnitt des Aufbaus verlaufenden Verstrebungslage in eine senkrechte, in enger Anlage oder in der Seitenschiene 29 verlaufende Lage hin und her verschoben und in beiden Lagen gesichert werden.

In der Ruheposition rastet somit die Strebe 10 in der Seitenschiene 29 in einem hochliegenden Punkt ein, und hängt senkrecht entlang der Seitenwand 3 herab, und ist dort gesichert, um ein Beschädigen der Ladung während der Fahrt zu vermeiden. Vorzugsweise ist die Strebe 10 dabei bündig mit der Innenfläche der Seitenwand in der Seitenschiene 29 eingelassen. Durch das bündige Einlassen ist ein Störungsfreies Be- und Entladen gegeben.

Zum Verbringen in die Verstrebungslage wird die Justierung der Strebe in der Seitenschiene gelöst, die Strebe 10 quer in den Laderaum 5 ragend gehalten und das in der Seitenschiene 29 geführte Ende der Strebe herabgelassen, bis es in der für die Verstrebungslage vorgesehenen Position dort verrastet, was automatisch oder manuell geschehen kann.

Anschließend wird das freie Ende der Strebe 10 abgesenkt, welches in der Verstrebungslage genau auf den im Boden angeordneten Befestigungspunkt 8 trifft, und mit diesem wiederum verrastet werden kann.

Vorzugsweise sind bei allen Lösungen die Befestigungspunkte 8 im Boden 9 versenkt, um keine über den Ladeboden vorstehenden Hindernisse zu bieten. Um ein Verschmutzen der dadurch gebildeten Vertiefungen zu vermeiden, können die für die Befestigungspunkte 8 notwendigen Vertiefungen durch den Boden hindurch nach unten offen sein.

## Patentansprüche

1. LKW-Aufbau (1) bzw. LKW-Wechselbehälter bzw. LKW-Anhänger bzw. LKW-Sattelanhänger,
- welcher stirnseitig mit einem Rolltor (2) verschlossen werden kann und
- in seinem Inneren durch im wesentlichen waagerecht quer durch den Laderaum (5) verlaufende, in der Höhe verstellbare Ladebalken (6) bzw. Ladeböden gegenüber dem Boden des LKW-Aufbaus (1) eine erhöhte, zweite Ladeebene bilden können,
**dadurch gekennzeichnet, daß**
zwischen einem ersten Befestigungspunktam im Beladungsposition befindlichen Ladebalken (6) bzw. der Innenfläche (3,3') des Aufbaus und einem rahmenfesten Befestigungspunkt (8) am Boden (9) oder im unteren Bereich der Seiten (3, 3') des Aufbaus (1) wenigstens eine wenigstens zugfeste Strebe (10) im wesentlichen querverlaufend, schräg ansteigend, leicht aus der Verstrebungslage entfernbar angeordnet ist.
(Befestigung am Ladebalken:)

2. LKW-Aufbau nach Anspruch 1,
**dadurch gekennzeichnet, daß**
eine Zug- und druckfeste Strebe (10) möglichst flach ansteigend angeordnet ist.

3. LKW-Aufbau nach Anspruch 1,
**dadurch gekennzeichnet, daß**
als Streben (10) zwei ausschließlich zugfeste Streben (10a, 10b), etwa Stahlseile, angeordnet sind.

4. LKW-Aufbau nach Anspruch 3, wobei die Ladebalken (6) längenveränderbar durch Ineinanderschieben eines Basisteiles (6a) und eines Teleskopteiles (6b) ausgestaltet sind,
**dadurch gekennzeichnet, daß**
von den Streben (10) die eine am Basisteil (6a) und die andere am Teleskopteil (6b) angreift.

5. LKW-Aufbau nach Anspruch 3, wobei die Ladebalken (6) längenveränderbar durch Ineinanderschieben eines Basisteiles (6a) und eines Teleskopteiles (6b) ausgestaltet sind,
**dadurch gekennzeichnet, daß**
die Längenveränderbarkeit des Basisteiles (6a) zum Teleskopteil (6b) blockierbar ist.

6. LKW-Aufbau nach einem der vorhergehenden Ansprüche,
**dadurch gekennzeichnet, daß**
die Strebe (10) und der rahmenfeste Befestigungspunkt (8) möglichst nahe am rolltorseitigen Ende des Aufbaus (1), vorzugsweise im heckseitigen Rolltorportal, angeordnet sind.

7. LKW-Aufbau nach einem der vorhergehenden Ansprüche,
**dadurch gekennzeichnet, daß**
die Strebe (10) um eine im wesentlichen in Längsrichtung verlaufende, waagerechte Schwenkachse (11) am Ladebalken (6) schwenkbar befestigt ist und zwischen einer Ruhelage parallel zum Ladebalken (6) und einer Verstrebungslage schräg nach unten verlaufend und am Befestigungspunkt (8) endend, hin- und herverschwenkbar ist.

8. LKW-Aufbau nach einem der vorhergehenden Ansprüche,
**dadurch gekennzeichnet, daß**
die Schwenkachse (11) im Überlappungsbereich zwischen Basisteil (6a) und Teleskopteil (6b) angeordnet ist und Einrichtungen im Überlappungsbereich (12) vorhanden sind, die bei einem Verschwenken der Strebe (10) in die Verstrebungslage automatisch eine Verriegelung zwischen Basisteil (6a) und Teleskopteil (6b) bewirken.

9. LKW-Aufbau nach einem der vorhergehenden Ansprüche,
**dadurch gekennzeichnet, daß**
am rahmenfesten Befestigungspunkt (8) für die Strebe (10) Vorrichtungen vorhanden sind, die bei fehlender Befestigung des bodenseitigen Endes der Strebe (10) ein vollständiges Verschließen bzw. Sichern des Rolltores in der geschlossenen Position verhindern.

10. LKW-Aufbau nach Anspruch 9,
**dadurch gekennzeichnet, daß**
in der Nähe des Befestigungspunktes ein Hebel (14) angeordnet ist, der entgegen der Kraft einer Feder (15) durch die am Befestigungspunkt einrastende Strebe (10) verlagert wird, und über eine mechanische Verbindung dadurch einen Sperrstift (16) in der Verriegelungseinheit (17) des Rolltores (2) zurückzieht, welcher ansonsten ein Umlegen des Verriegelungshebels (18) des Rolltores (2) verhindert.

11. LKW-Aufbau nach einem der vorhergehenden Ansprüche,
**dadurch gekennzeichnet, daß**
am Befestigungspunkt (8) Vorrichtungen vorhanden sind, die bei fehlender Befestigung des bodenseitigen Endes der Strebe (10) am Befestigungspunkt eine der Hauptfunktionen des LKW außer Funktion setzt, insbesondere die Feststellbremse in die Bremsstellung bringt.

12. LKW-Aufbau nach einem der vorhergehenden Ansprüche,
**dadurch gekennzeichnet, daß**
am LKW-Aufbau (1) in der Nähe der Decke, in dessen Nähe die Ladebalken als Ruheposition verbracht werden, Sensoren aufweist, die die Vorrichtungen zur Inaktivierung einer Fahrzeugfunktion außer Funktion setzen, wenn sich der entsprechende Ladebalken (6) in der Ruheposition unter der Decke (13) des Aufbaus (1) befindet.

13. LKW-Aufbau nach Anspruch 1,
**dadurch gekennzeichnet, daß**
wenigstens das der Schwenkachse (11) für die Strebe (10) benachbarte Ende (7) des Ladebalkens (6) in der entsprechenden Befestigungsschiene (4) automatisch sowohl gegen das Hochschieben als auch gegen das Absenken verrastet.
(Strebe am Aufbau befestigt)

14. LKW-Aufbau nach Anspruch 1,
**dadurch gekennzeichnet, daß**
- die Strebe (10) mit einem Ende entlang der Innenfläche einer Seite (3, 3') vertikal geführt und verstellbar ist, - die Strebe (10) wenigstens in einer annähernd vertikalen, parallel zur Seitenwand (3, 3') befindlichen Ruheposition sowie einer schräg zum Boden (9) bzw. der Seite (3, 3') verlaufenden Verstrebungslage justierbar ist
- die Strebe (10) in der schräg verlaufenden Verstrebungslage mit ihrem anderen Ende an einem Befestigungspunkt (8) am bzw, im Boden (9) des Aufbaus querverlaufend, leicht ansteigend befestigbar ist,
und die Strebe (10) sowohl zug- als auch druckbelastbar ist.
